# EUROPEAN PATENT SPECIFICATION

(11) **EP 1 890 865 B1**
(45) Date of publication and mention of the grant of the patent: **21.01.2015**
(21) Application number: 06752078.3
(22) Date of filing: 04.05.2006
(51) Int. Cl.: B32B 29/08, B32B 3/04, B32B 3/10, B31D 1/00, B32B 29/00, B32B 7/12

(54) **ROLL OF PAPERBAND**
PAPIERBANDROLLE
ROULEAU DE RUBAN DE PAPIER

(30) Priority: 02.06.2005 US 142951
(43) Date of publication of application: 27.02.2008
(73) Proprietor: SANDAR INDUSTRIES, INC., Atlantic Beach, FL 32233 (US)
(72) Inventor: RODRIGUEZ, Peter, A., Jacksonville, Florida 32225 (US)
(74) Representative: LEITZINGER OY
(86) International application number: PCT/US2006/016782
(87) International publication number: WO 2006/132731

(56) References cited:
- US-A- 2 499 463
- US-A- 5 816 526

## Description

### CROSS REFERENCE TO RELATED APPLICATIONS

This application is related to an application entitled "ROLL OF PAPERBAND" Ser. No. 10/617,418, filed 7/11/2003; and an application entitled "ROLL OF PAPERBAND" Ser. No. 10/878,727, filed 6/28/2004.

### STATEMENT REGARDING FEDERALLY SPONSORED RESEARCH OR DEVELOPMENT

### Not Applicable

### REFERENCE TO MICROFICHE APPENDIX

### Not Applicable

### BACKGROUND OF THE INVENTION

### TECHNICAL FIELD

This invention relates to a roll of paperband wherein the paperband is formed of a three layer center portion and two layer side portions, and includes longitudinal indentations and transverse undulations to create a corrugated structure to control stiffness and flexibility of the band as desired.

### PRIOR ART

It is a common practice in the papermaking and packaging industries to employ a paperband or strap that is loaded into a channel of a track assembly and then removed rapidly out of the channel and employed to cut and spool a web of paper onto an empty spool or to be used to wrap around and secure a load, container or a bundle of material. Because the paperband should be stiff enough to be pushed into the channel from one end thereof, the band may twist or otherwise be distorted or separated during upward movement that is accomplished by a "stripping" action during removal from the paperband track assembly. This becomes a very important consideration in those applications where the width of the channel opening is made less than the width of the band or tape and the lower tape-carrying guide way of the channel in order to cover and carry the tape. An improved paperband is disclosed herein that greatly reduces the distortion and crimping common to prior art paperbands, reduces the wear on the guide way channel and its cover, and also reduces the separation of layers in some bands made from multiple layers.

Examples of the prior art include U.S. Patent No. 5,816,526, which discloses multi-ply folded strip held together by adhesive. U.S. Patent No, 3,126,312 discloses a plurality of elongate members aligned in a plane and held together by adhesive. U.S. Patent No. 4,414,258 discloses a woven ribbon made of flat strips and weft filaments, which are held in place by adhesive.

U.S. Patent Publication No. 2004/0131825 A1 (July 8,2004) discloses a strap constructed of a double layer of elongated paper elements secured with adhesive on at least a portion of the strap.

None of the above-described paper devices is satisfactory for use in a paperband track assembly beneath wide paper machines for the reason that they do not have the required stiffness for such use.

### BRIEF SUMMARY OF THE INVENTION

In one aspect of the present invention there is provided a roll of paperband adaptable for use in paper web cutting and turn-up systems or for use in baling, the paperband comprising an elongate multi-ply board having upper and lower surfaces, and a center portion and spaced reduced side portions, each side portion having an inside edge portion and an outside edge portion, each inside edge portion being defined by an elongate longitudinal first groove between the center portion and respective side portion. The center portion is folded to provide three layers and the side edge portion is two layers of the paperboard. A longitudinal line of weakness is formed between the center portion and respective side portions. An adhesive layer is located between each side portion and the center portion. An adhesive coating may be located on one surface or both surfaces of the paperband when the paperband is used for baling, depending on the type of adhesive. The undulation parameters are defined by and chosen to increase or decrease stiffness and stretchability. The undulations are provided on the upper and lower surfaces of the paperband. The adhesive layer is preferably water-soluble.

In another aspect of the present invention there is provided a roll of paperband adaptable for use in paper web cutting and tune-up systems or for use in baling, the paperband including an elongate multi-ply board having upper and lower surfaces, and a center portion and spaced reduced side portions, each side portion having an inside edge portion, and an outside edge portion, each inside edge portion being defined by an elongate longitudinal first groove between the center portion and respective side portion, each side portion being foldable about respective grooves. The paperband includes transverse corrugations, creases or undulations to enable the multi-ply board to be formed into a roll of paperband without materially affecting its tensile strength. The corrugations are formed to shorten the length of the paperband to provide a shock-absorbing function to minimize tearing of the paperband when tensile force is applied to the paperband.

### BRIEF DESCRIPTION OF THE SEVERAL VIEWS OF THE DRAWING

The novel features believed to be characteristic of this invention are set forth with particularity in the appended claims. The invention itself, however, both as to its organization and method of operation, together with further objects and advantages thereof, may best be understood by reference to the following description taken in connection with the accompanying drawings in which:
FIG. 1 is an end diagrammatic exploded view of a typical paperband;
FIG. 2 is a perspective view of the paperband of FIG. 1 showing added undulations;
FIG. 3 is an enlarged side diagrammatic view of the paperband of FIG. 2;
FIG. 4 is a cross-sectional view of a prior art track assembly usable with the paperband of the present invention
FIG. 5 is a side diagrammatic view of a roll of paperband in accord with the present invention;
FIG. 6 is an end diagrammatic view of a first embodiment of a paperband in accord with the present invention.
FIG. 7 is an end diagrammatic view of a second embodiment of a paperband in accord with the present invention illustrating the generally S-shaped folding; and
FIG. 8 is a greatly enlarged view of one end of the paperband of FIG. 7 after being pressed into final form.

### DETAILED DESCRIPTON OF THE INVENTION

### INTRODUCTION

The paperband disclosed herein is formed of a multi-ply board made by a multiply board machine with a chemical composition, weight and thickness selected for a particular application. As a general proposition however, the high degree of stiffness of a multi-ply board does not allow of a turn-up paperband cutting tape.

The present paperband includes a series of staggered transverse indentations, undulations or formations that result in a "corrugated" profile and provide the desired flexibility without a significant sacrifice of overall strength.

The lengthwise extent of the transverse indentations or undulations provides for a level of shock-absorbing capability because a slight stretching of the paperband can occur when high tensile forces are applied during rapid removal of the band from a turn-up track assembly or in strapping applications such as baling.

As understood in papermaking art, paper and paperband can be made in a manner to provide greater strength in the longitudinal direction represented by the direction of the paper through the papermaking machine. The present paperband employs board of 8 to 30 points and is stronger in the machine direction lengthwise than cross-machine direction by about 5:1. Preferably, the board is made of several plies formed of cellulose fibers bonded together and is manufactured on a multi-ply board machine.

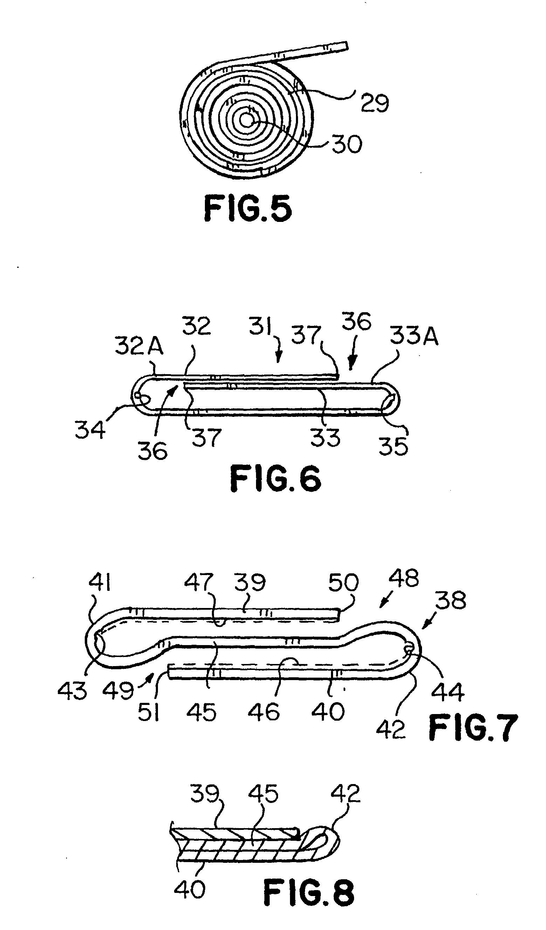

The paperband typically is formed from a length of board by feeding the board through rollers to provide two spaced longitudinal scores or creases along the length of the board. Adhesive is applied to the upper surface between the scores or creases. The board is then folded by a forming die at the creases so that the side edges are folded inwardly and are closely adjacent each other or even in an abutting relationship over the medial line which may be scored longitudinally at the same time as the creases are formed and pressed to fix the adhesive. The board is fed through rollers to corrugate the board transversely. The joint between the outside edges-which may be a small gap-provides for the desired bending medially when the paperband is pulled from a track assembly and such bending may be enhanced by a score line therealong. In a first embodiment, the adhesive may be applied to the entire upper surface (see FIG. 6) or in a second embodiment to opposed surfaces of the foldable edge portions beyond the creases (see FIG. 7).

### CONSTRUCTION

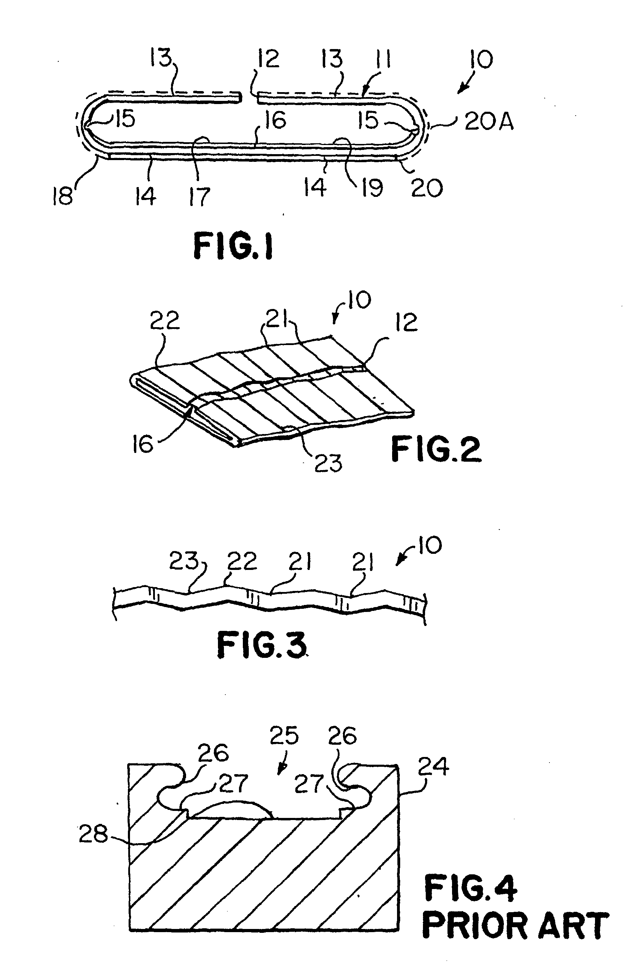

With respect now to the drawings, the typical paperband includes multi-ply board 11 folded to form gap 12. Spaced pair of side grooves or creases 15 and a medial longitudinal line or narrow area of weakness 16 is formed by spaced side portions 13 and parallel medial portions 14 forming gap 12. An interior surface 17 has an interior adhesive coating 19 thereon which holds the paperband together. And exterior surface 18 may have a heat or water-activated adhesive coating 20 if the paperband 10 is used for baling. If PVA is used for sealing the band, then the entire exterior surface 18 is preferably coating 20 (as shown by dotted line 20A in FIG. 1). See, for example U.S. Patent No. 6,363,689. The dimensions of the paperband 10 are exaggerated for purposes of illustration.

Transverse undulations or corrugations 21 are created to provide the desired flexibility and may be a wave-like or "sine wave" or any other form that may be appropriate depending upon the use to be made of the paperband 10. Preferably, the roll 29 (FIG. 5) is carried in a closed "loop box" (not shown) and may stow a large quantity of paperband 10 or 31, each of which have transverse corrugations. The confined space of the box would severely limit the amount of paperband that can be carried if the paperband did not have the flexibility that results from the transverses corrugations 21 that are created.

Preferably, corrugations 21 are created as shown in FIG. 2 after the band 10 has been folded as shown in FIG. 1. The corrugations 21 allow for a slight elongation of the band 10 when under tension and provide a "shock absorber" function. Transverse score lines likely would weaken the tensile strength of the band 10 and thus is not encompassed by this invention.

FIGS. 2 and 3 are views of the paperband having transverse undulations or corrugations 21 to create respective ridges or hills 22 and grooves or valleys 23 to create a corrugated structure of the band 10.

FIG. 4 illustrates a prior art track assembly 24 having a paperband carrier 25 formed with a channel 25 formed with a channel 28, two side guide shoulders 27 in grooves 26.

FIG. 5 is a side diagrammatic view of paperband 10, 31 or 38 wound in a roll 29 around center core 30.

FIG. 6 illustrates a first embodiment of the paperband 31 having partially overlapping side portions 32, 33 defined by longitudinal score lines 34, 35 and edges 37. The section of the paperband 31 between the side portions 32A, 33A do not overlap, form longitudinal lines or narrow areas of weakness 36 since the edge portions are two layers of the multi-ply material which the center portion has three layers of the material and permit bending along 36 of the paperband 31 during turn-up or other uses.

In FIG. 7, a second embodiment of a paperband 38 includes side portions 39 and 40 and a medial or center portion 45 folded to form a generally S-shape. The side portion 39 is folded about longitudinal score line 43 forming a "soft bend" 41. The other side portion 40 is similarly folded about longitudinal score line 44 to form a "soft bend" 42. Areas of weakness or flexible joints 48 and 49 are created during the transition from three layers to two layers. Adhesive layers 46 and 47 are shown on opposed surfaces of the paperband 38, i.e., an upper surface of side portions 39 and a lower surface of side portion 40. Alternately, the adhesive 46, 47 may be applied simultaneously to both surfaces of center portion 45. This method may be accomplished by feeding the unfolded paperband board vertically to permit the adhesive 46, 47 to be sprayed on or otherwise applied to center portion 45 by any appropriate technology.

The performance of paperband 38 is similar to that of paperbands 10, 31 in track pullout by way of flexing at joints 48 and 49. After pressing to fix the adhesive 46, 47, the desired transverse undulations are formed as in the other embodiments previously described. The soft bends 41 and 42 are formed in the manner described to provide the paperband 38 with substantially planar outer surfaces as the ends 50, 51 transition more smoothly with adjacent portions of soft bends 41, 42 to create relatively flat sides for the paperband 38 (FIG. 8). In other words, the three-layer center portion of the multi-ply board are compressed by uniformly spaced apart rollers and the two-layer edge portions are compressed at the same time but only to the thickness determined by the three-layer center portion. In addition, the soft bends 41, 42 also increase tear resistance in the transverse or crosswise direction of the paperband.

The preferred paperbands 31 and 38 provide for the use of thinner multi-ply board (for the same bulk) than other embodiments. This derives from the higher strength/density of the thinner board. The horizontal and vertical symmetry of the completed band is also preferred. The folded edge portions provide for the "flexing" or bending during turn-up and also provide for high resistance to cross-wise tearing of the band and reduced fiber damage during compression-forming of the band. The thinner board also allows for the footage at the same diameter thus providing for fewer splices of the band.

The undulating or wave-like formations of the paperbands are defined in terms of parameters including height, width and number per unit elongate length and are the result of the use of rollers or any appropriate apparatus. The creation of the corrugations or undulations 21 causes a selectable shortening of the paperband 10 that provides a shock absorbing capability when tensile force is applied to the paperband 10 when it is stripped out of track assembly 24 during turn-up or when being pulled tightly during a baling operation.

In the baling pulp it is common for the bale to "grow" or become enlarged as it absorbs moisture from its surroundings. An additional benefit of the corrugations of the band is that it allows for growing of the bale without considerably affecting the overall strength of the band under the circumstances. The size, shape and number of the corrugations can be varied to adjust the stretchability and/or stiffness of the band as desired in a specific application.

The preferred methodology of forming the paperband 10 is as follows:
A. The score or crease lines 15 are formed.
B. Adhesive is applied to the center portion 14 between the scores 15 (not preferred adhesive applied to side portions 13).
C. The side portions 13 are folded over by a forming die.
D. The side portions 13 are then pressed onto the medial portions 14 to fix to the adhesive.
E. Transverse corrugations 21 are formed in the paperband.

The specific type of formations 22, 23 and how they are formed varies in the circumstances. It is important, however, to avoid scores or cuts or similar formations the result in a reduction of the tensile strength of the paperband as such result would be counterproductive. Transverse indentations which do not materially affect the strength of the paperbands in accord with the present invention may be employed to create undulations where dictated by the specific application.

As the undulations are more pronounced by pressure of the rollers, the height of the undulations are increased and/or may be less pronounced by decrease in roller pressure. Alternately, the width of undulations and/or the number per lineal distance may be varied to increase or decrease the stiffness and/or stretchability of the paperband. In addition, the folded edges of the paperbands 10, 31, 38 minimize cross tearing of the paperbands 10, 31, 38. Preferably, all plies are made of cellulose fibers although other material may be used if necessary. Also, all adhesive, which may include PVA, is water-soluble to aid in repulping of the paperband particularly in baling applications. Preferably, if PVA is used, the adhesive is applied to both sides of the paperband because the adhesive sticks best to itself. The use of PVA on only one side results in inadequate adhesion in many circumstances.

## Claims

1. A roll of paperband (31; 38) composed of folded paperboard and suitable for use in paper web cutting, turn-up systems and baling, said paperband comprising:
a paperboard having side portions (32, 33; 39, 40), a center portion (45) and edges (37; 50, 51), said side portions being folded inwardly toward said center portion, the width of said side portions being less than the width of said center portion but greater than half the width of said center portion, such that said side portions overlap each other but do not extend completely across said center portion and thereby defining a middle three layer portion and a pair of two layer lateral portions; and
said center portion and respective said side portions (32, 33; 39, 40) forming two longitudinal flexible lines of weakness (36; 48, 49) being defined adjacent said edges (37; 50, 51) such that said two layer lateral portions readily flex relative to said middle three layer portion.

2. The paperband (31) of claim 1, wherein said side portions (32, 33) are disposed on the same side of said center portion.

3. The paperband (31) of claim 2, further comprising transverse creases.

4. The paperband (31) of any of claims 2 to 3, further comprising longitudinal score lines (34, 35; 43, 44) delineating said side portions (32, 33; 39, 40) from said center portion (45) and facilitating folding.

5. The paperband (38) of claim 1, wherein said side portions (39, 40) are disposed on the opposite sides of said center portion (45).

6. The paperband (38) of claim 5, further comprising longitudinal score lines (43, 44) delineating said side portions (48, 49) from said center portion (45) and facilitating folding.

7. The paperband (38) of claim 5 or 6, further comprising transverse creases.

8. The paperband (31; 38) of any of claims 1-7 wherein at least one of said side portions (32, 33; 39, 40) is adhesively joined to said center portion (45).

9. The paperband (31; 38) of claim 8 wherein both said side portions (32, 33; 39, 40) are respectively adhesively joined to said center portion (45).

10. The paperband (31; 38) of claim 1 wherein said band is used in a track assembly (24) beneath a paper web cutting and turn-up system and said two layer lateral portions flex when said paperband is pulled from such track assembly.

11. The paperband (31; 38) of claim 1 wherein a longitudinal groove extends between said center portion and respective said side portions (32, 33; 39, 40) for folding said side portions flat with respect to said center portion.

12. The paperband (38) of claim 11 wherein said side (39, 40) portions respectively extend above and below said center portion.

13. The paperband (31; 38) of any of claims 11 to 12 wherein said side portions (32, 33; 39, 40) are adhesively joined to said center portion.

14. The paperband (31; 38) of claim 1 wherein said paperband includes transverse undulations (21) to enable said paperband to be formed into a roll of paperband without materially affecting its tensile strength.

15. The paperband (31; 38) of claim 14 wherein said transverse undulations (21) provide a shock-absorbing function to minimize tearing of said paperband when tensile force is applied to said paperband.

16. The roll of paperband (38) as defined in claim 15 wherein said paperband includes an outer surface, and further including an adhesive coating (46, 47) on said outer surface of said paperband.

17. The roll of paperband (38) as defined in claim 13 wherein one said side portion (39) is folded to place an upper surface of said one side portion onto said central portion (45), another said side portion (40) being folded to place a lower surface of said another side portion onto said center portion (45), said side portions (39, 40) being folded so that a pair of spaced generally parallel longitudinal lines of weakness (48, 49) are formed closely adjacent respective said outside edge portion (50, 51) of each said side portion (39, 40).

18. The roll of paperband (31; 38) as defined in claim 13 wherein said side portions (32, 33; 39, 40) are foldable to overlap so that a pair of spaced generally parallel longitudinal lines of weakness (36; 48, 49) are formed closely adjacent each of said outside edge of said center portion (45).

19. The roll of paperband (31; 38) as defined in claim 13 wherein said side portions (32, 33; 39, 40) are foldable over said center portion to provide a three layer portion of said paperband located medially thereof and a two layer portion laterally on respective said edges of said center portion to provide a pair of spaced longitudinal lines of weakness (36; 48, 49) respectively where said three layer portion is adjacent said two layer portions.

## Patentansprüche

1. Papierbandrolle (31; 38), die aus gefalteter Pappe besteht, und zur Verwendung beim Schneiden von Papierbahnen, bei Wechselsystemen und der Verpackung in Ballen verwendbar ist, wobei das Papierband Folgendes umfasst:
eine Pappe mit Seitenbereichen (32, 33; 39, 40), einem Mittelbereich (45) und Kanten (37; 50, 51), wobei die Seitenbereiche nach Innen in Richtung des Mittelbereichs gefaltet sind, wobei die Breite der Seitenbereiche geringer als die Breite des Mittelbereichs ist, jedoch nicht größer als die halbe Breite des Mittelbereichs, derart, dass die Seitenbereiche einander überlappen aber sich nicht vollständig über den Mittelbereich erstrecken und dabei einen mittleren dreischichtigen Bereich und zwei zweischichtige laterale Bereiche definieren; und
der Mittelbereich und die jeweiligen Seitenbereiche (32, 33; 39, 40) zwei längsgerichtete flexible Schwächelinien (36; 48, 49) bilden, die anliegend an den Kanten (37; 50, 51) derart definiert sind, dass die zweischichtigen lateralen Bereiche sich leicht bezüglich des mittleren Dreischichtbereiches biegen.

2. Papierband (31) nach Anspruch 1, wobei die Seitenbereiche (32, 33) auf derselben Seite des Mittelbereiches angeordnet sind.

3. Papierband (31) nach Anspruch 2, ferner umfassend querlaufende Knicke.

4. Papierband (31) nach einem der Ansprüche 2 bis 3, ferner umfassend längsgerichtete Kerblinien (34, 35; 43, 44), welche die Seitenbereiche (32, 33; 39, 40) von dem Mittelbereich (45) abgrenzen und das Falten erleichtern.

5. Papierband (38) nach Anspruch 1, wobei die Seitenbereiche (39, 40) auf den gegenüberliegenden Seiten des Mittelbereiches (45) angeordnet sind.

6. Papierband (38) nach Anspruch 5, ferner umfassend längsgerichtete Kerblinien (43, 44), welche die Seitenbereiche (48, 49) von dem Mittelbereich (45) abgrenzen und das Falten erleichtern.

7. Papierband (38) nach Anspruch 5 oder 6, ferner umfassend querlaufende Knicke.

8. Papierband (31; 38) nach einem der Ansprüche 1 bis 7, wobei wenigstens einer der Seitenbereiche (32, 33; 39, 40) klebend mit dem Mittelbereich (45) verbunden ist.

9. Papierband (31; 38) nach Anspruch 8, wobei beide Seitenbereiche (32, 33; 39, 40) jeweils mit dem Mittelbereich (45) klebend verbunden sind.

10. Papierband (31; 38) nach Anspruch 1, wobei das Band in einer Gleisvorrichtung (24) unterhalb eines Papierbahnschneide- und Wechselsystems verwendet wird und sich die zweischichtigen lateralen Abschnitte biegen, wenn die Papierrolle aus dieser Gleisvorrichtung herausgezogen wird.

11. Papierband (31; 38) nach Anspruch 1, wobei sich eine längsgerichtete Vertiefung zwischen dem Mittelbereich und den jeweiligen Seitenbereichen (32, 33; 39, 40) erstreckt, damit die Seitenbereiche bezüglich des Mittelbereiches flach gefaltet werden.

12. Papierband (38) nach Anspruch 11, wobei die Seitenbereiche (39, 40) sich jeweils über und unter den Mittelbereich erstrecken.

13. Papierband (31; 38) nach einem der Ansprüche 11 bis 12, wobei die Seitenbereiche (32, 33; 39, 40) klebend mit dem Mittelbereich verbunden sind.

14. Papierband (31; 38) nach Anspruch 1, wobei das Papierband querlaufende Wellen (21) umfasst, damit das Papierband zu einer Papierbandrolle geformt werden kann, ohne dessen Zugfestigkeit wesentlich negativ zu beeinflussen.

15. Papierband (31; 38) nach Anspruch 14, wobei die querlaufenden Wellen (21) eine stoßdämpfende Funktion zur Verfügung stellen, um das Reißen des Papierbandes zu minimieren, wenn eine Zugkraft auf dem Papierband angewendet wird.

16. Papierbandrolle (38) nach Anspruch 15, wobei das Papierband eine äußere Oberfläche umfasst und ferner eine klebende Beschichtung (46, 47) auf der äußeren Oberfläche des Papierbandes umfasst.

17. Papierbandrolle (38) nach Anspruch 13, wobei ein Seitenbereich (39) gefaltet wird, um eine obere Oberfläche des einen Seitenbereiches auf dem Mittelbereich (45) anzuordnen, wobei ein weiterer Seitenbereich (40) gefaltet wird, um eine untere Oberfläche des anderen Seitenbereiches auf dem Mittelbereich (45) anzuordnen, wobei die Seitenbereiche (39, 40) so gefaltet werden, dass ein Paar im Allgemeinen parallel in einem Abstand angeordneter längsgerichteter Schwächelinien (48, 49) nahe an dem jeweiligen Außenkantenbereich (50, 51) von jedem der Seitenbereiche (39, 40) gebildet werden.

18. Papierbandrolle (31; 38) nach Anspruch 13, wobei die Seitenbereiche (32, 33; 39, 40) faltbar sind, um zu überlappen, derart, dass ein Paar im Allgemein parallel in einem Abstand angeordneter Schwächelinien (36; 48, 49) nahe an jeder der Außenkanten des Mittelbereichs (45) gebildet werden.

19. Papierbandrolle (31; 38) nach Anspruch 13, wobei die Seitenbereiche (32, 33; 39, 40) über dem Mittelbereich faltbar sind, um einen Dreischichtbereich des Papierbandes zu bilden, der medial davon angeordnet ist und einen Zweischichtbereich lateral auf jeweils den Kanten des Mittelbereiches, um ein Paar von in einem Abstand angeordneter längsgerichteter Schwächelinien (36; 48, 49) jeweils dort zur Verfügung zu stellen, wo der Dreischichtbereich neben den Zweischichtbereichen liegt.

## Revendications

1. Rouleau de ruban de papier (31 ; 38) composé de carton plié et apte à être utilisé dans la découpe, des systèmes de retournement et mise en balles d'une nappe de papier, comprenant :
un carton ayant des parties latérales (32, 33 ; 39, 40), une partie centrale (45) et des bords (37 ; 50, 51), lesdites parties latérales étant pliées vers l'intérieur en direction de ladite partie centrale, la largeur desdites parties latérales étant inférieure à la largeur de ladite partie centrale mais supérieure à la moitié de la largeur de ladite partie centrale de manière à ce que lesdites parties latérales se chevauchent mutuellement mais ne s'étendent pas complètement en travers de ladite partie centrale et définissent ainsi une partie médiane à trois épaisseurs et une paire de parties latérales à deux épaisseurs ; et
ladite partie centrale et lesdites parties latérales respectives (32, 33 ; 39, 40) formant deux lignes flexibles longitudinales de faiblesse (36 ; 48, 49) définies de manière à être adjacentes auxdits bords (37 ; 50, 51) de manière à ce que lesdites parties latérales à deux épaisseurs se plient directement par rapport à ladite partie médiane à trois épaisseurs.

2. Ruban de papier (31) selon la revendication 1, dans lequel lesdites parties latérales (32, 33) sont disposées sur la même face de ladite partie centrale.

3. Ruban de papier (31) selon la revendication 2, comprenant en outre des rainures transversales.

4. Ruban de papier (31) selon l'une quelconque des revendications 2 à 3, comprenant en outre des lignes de déchirage longitudinales (34, 35 ; 43, 44) délimitant lesdites parties latérales (32, 33 ; 39, 40) par rapport à ladite partie centrale (45) et facilitant le pliage.

5. Ruban de papier (38) selon la revendication 1, dans lequel lesdites parties latérales (39, 40) sont disposées sur les faces opposées de ladite partie centrale (45).

6. Ruban de papier (38) selon la revendication 5, comprenant en outre des lignes de déchirage longitudinales (43, 44) délimitant lesdites parties latérales (48, 49) par rapport à la ladite partie centrale (45) et facilitant le pliage.

7. Ruban de papier (38) selon la revendication 5 ou 6, comprenant en outre des rainures transversales.

8. Ruban de papier (31 ; 38) selon 1"une quelconque des revendications 1 à 7, dans lequel au moins une desdites parties latérales (32, 33 ; 39, 40) est assemblée par collage à ladite partie centrale (45).

9. Ruban de papier (31 ; 38) selon la revendication 8, dans lesdites deux parties latérales (32, 33 ; 39, 40) sont respectivement assemblées par collage à ladite partie centrale (45).

10. Ruban de papier (31 ; 38) selon la revendication 1, dans lequel ledit ruban est utilisé dans un ensemble de piste (24) entre un système de découpe et de retournement de nappe de papier et lesdites parties latérales à deux épaisseurs se plient lorsque ledit ruban de papier est tiré hors de cet ensemble de piste.

11. Ruban de papier (31 ; 38) selon la revendication 1, dans lequel une gorge longitudinale s'étend entre ladite partie centrale et lesdites parties latérales respectives (32, 33 ; 39, 40) pour plier lesdites parties latérales à plat par rapport à ladite partie centrale.

12. Ruban de papier (38) selon la revendication 11, dans lequel les dites parties latérales (39, 40) s'étendent respectivement au-dessus et en-dessous de ladite partie centrale.

13. Ruban de papier (31 ; 38) selon l'une quelconque des revendications 11 à 12, dans lequel lesdites parties latérales (32, 33 ; 39, 40) sont assemblées par collage à ladite partie centrale.

14. Ruban de papier (31 ; 38) selon la revendication 1, dans lequel ledit ruban de papier comprend des ondulations transversales (21) pour permettre audit ruban de papier d'être transformé en un rouleau de ruban de papier sans affecter matériellement sa résistance à la traction.

15. Ruban de papier (31 ; 38) selon la revendication 14, dans lequel lesdites ondulations transversales (21) ont une fonction d'absorption de chocs pour minimiser le déchirage dudit ruban de papier lorsqu'une force de traction est appliquée audit ruban de papier.

16. Rouleau de ruban de papier (38) selon la revendication 15, dans lequel ledit ruban de papier comporte une surface extérieure et comportant en outre un revêtement adhésif (46, 47) sur ladite surface extérieure dudit ruban de papier.

17. Rouleau de ruban de papier (38) selon la revendication 13, dans lequel une dite partie latérale (39) est pliée pour placer une surface supérieure de ladite une partie latérale sur ladite partie centrale (45), une autre partie latérale (40) étant pliée pour placer une surface inférieure de ladite autre partie latérale sur ladite partie centrale (45), lesdites parties latérales (39, 40) étant pliées de manière à ce qu'une paire de lignes longitudinales de faiblesse (48, 49) espacées et globalement parallèles soit formée de manière à être étroitement adjacente à ladite partie périphérique extérieure (50, 51) de chaque dite partie latérale (39, 40).

18. Rouleau de ruban de papier (31 ; 38) selon la revendication 13, dans lequel lesdites parties latérales (32, 33 ; 39, 40) sont pliables pour se chevaucher de manière à ce qu'une paire de lignes longitudinales de faiblesse (36 ; 48, 49) espacées et globalement parallèles soit formée de manière à être étroitement adjacente à chacun desdits bords extérieurs de ladite partie centrale (45).

19. Rouleau de ruban de papier (31 ; 38) selon la revendication 13, dans lequel lesdites parties latérales (32, 33 ; 39, 40) sont pliables sur ladite partie centrale pour former une partie à trois épaisseurs dudit ruban de papier située en son milieu et une partie à deux épaisseurs latéralement sur lesdits bords de ladite partie centrale pour former respectivement une paire de lignes longitudinales de faiblesse (36 ; 48, 49) espacées là où ladite partie à trois épaisseurs est adjacente auxdites parties à deux épaisseurs.
